# EUROPÄISCHE PATENTSCHRIFT

(11) **EP 0 374 916 B1**
(45) Veröffentlichungstag und Bekanntmachung des Hinweises auf die Patenterteilung: **11.05.1994**
(21) Anmeldenummer: 89123656.4
(22) Anmeldetag: 21.12.1989
(51) Int. Cl.: B23B 31/12

(54) **Führungsvorrichtung**
Guide device
Dispositif de guidage

(30) Priorität: 22.12.1988 DE 3843257
(43) Veröffentlichungstag der Anmeldung: 27.06.1990
(73) Patentinhaber: Th. Kieserling & Albrecht GmbH & Co., D-42651 Solingen (DE)
(72) Erfinder: Glomb, Reiner, Dipl.-Ing., D-5620 Velbert (DE); Maresch, Peter, Dipl.-Ing., D-5650 Solingen (DE); Wagner, Ralf, Dipl.-Ing., D-5650 Solingen 1 (DE)
(74) Vertreter: Stachow, Ernst-Walther, Prof. Dr.

(56) Entgegenhaltungen:
- DE-A- 2 501 408
- DE-A- 3 346 613
- DE-B- 1 602 870
- PATENT ABSTRACTS OF JAPAN vol. 5, no. 47 (M-61)(719) 28 März 1981,& JP-A-56 3158 (TOYODA KOKI K.K.) 13 Januar 1981,

## Beschreibung

Die Erfindung betrifft eine Führungsvorrichtung nach dem Oberbegriff von Anspruch 1. Schälmaschinen, an denen derartige Führungsvorrichtungen eingesetzt werden, dienen hauptsächlich dazu, aus warmgewalztem Rundmaterial sogenannten Blankstahl herzustellen. Dabei wird das stangenförmige Rundmaterial an seinem zylindrischen Umfang durch einen rotierenden Messerkopf geschält. Die Stange selbst wird gegen ungewollte Rotation gesichert axial durch eine Zentralbohrung im Messerkopf durch die Schälmaschine geführt. Der rotierende Messerkopf trägt 3 oder mehr nach innen gerichtete Messer, die die Stange auf wendelförmiger Bahn schälen. Derartige Schälmaschinen werden bei Draht, Stangen und Rohren eingesetzt. Die derzeit gebräuchlichen Schälmaschinen arbeiten mit einem Rollen-Einschubapparat einlaufseitig vor dem Messerkopf, der aus zwei Rollenpaaren besteht und mit einem Spannwagen auslaufseitig des Messerkopfes, der den Stab gegen Verdrehen sichert und transportiert, wenn das letzte Ende des Stabes geschält wird.

Moderne Schälmaschinen können den Vorschub, die Messerkopfdrehzahl und den Fertigdurchmesser während des Betriebs verändern.
Der grundsätzliche Aufbau von Schälmaschinen mit einem Einschubapparat ist aus der DE-A-33 46 613 bekannt. Dabei wird der Stab auslaufseitig hinter dem Messerkopf, innerhalb der Hohlwelle von einer sogenannten 'hinteren Führung' geführt. Eine Führungseinrichtung der gattungsbildenden Art für Stäbe in Schälmaschinen ist aus der DE-A-32 40 146 bekannt. Die hintere Führung ist am Maschinengestell befestigt und kragt in die umlaufende Hohlwelle hinein bis in die Nähe des Messerkopfes. Die bekannte hintere Führung hat einzeln abgefederte Führungselemente, die am Werkstück anliegen und hat eine Zentralverstellung für alle Führungselemente. Die Zentralverstellung ist abgefedert. Nachteilig bei einer Schälmaschine mit der bekannten hinteren Führung ist, daß der Zentriereffekt zur Führung des geschälten Stabes auf Maschinenmitte nicht stark genug ist.

Der Begriff der Abfederung soll nicht nur mechanische Federn erfassen, sondern vielmehr auch hydraulische oder ähnliche nachgiebige Abstützungen einschließen.
Die Aufgabe der vorliegenden Erfindung besteht darin, eine Führungsvorrichtung zu schaffen, bei der der Zentriereffekt und der Einzelabfederungseffekt beliebig kombiniert und auf die Bedürfnisse des Einzelfalles abgestimmt werden können.

Diese Aufgabe wird erfindungsgemäß durch die Merkmale von Anspruch 1 gelöst. Eine solche Führungsvorrichtung bietet die Möglichkeit, daß die Charakteristik der Führungselemente ausgewählt werden kann. Eine weichere Einzelabfederung kann ebenso eingestellt werden, wie eine straffe Zentralabfederung.

Bei der bevorzugt vorgesehenen Ausgestaltung der Erfindung nach Anspruch 2 ergibt sich beim Betrieb der Führungsvorrichtung die Situation, daß die Einzelabfederung der einzelnen Führungselemente im Normalfall nicht zum Tragen kommt. Die Federn zur Abstutzung der einzelnen Führungselemente sind zu Block bzw. gegen das starre Widerlager gefahren. Es wirkt zunächst nur die Zentralabfederung, mit der alle Führungselemente synchron und zentrisch öffnen bzw. schließen. Dies dient der Berücksichtigung von geringfügigen Schwankungen des Durchmessers der geschälten Stange und der zuverlässigen Anlage aller Führungselemente am zur Maschinenmitte zentrierten Stab. Die besonderen Vorzüge der Ausgestaltung der Erfindung nach Anspruch 2 kommen darin zum Ausdruck, daß auch ein steifer und leicht gekrümmter Stab, der von der Führung nicht auf die Maschinenmitte gezwungen werden kann, noch ausreichend gut geführt wird. Der gekrümmte Stab wird ein Führungselement so stark belasten, daß die Zentralverstellung das von den Führungselementen gebildete Kaliber öffnet. Damit könnte der geschälte Stab innerhalb des vergößerten Kalibers schwingen. Dies verhindern die Einzelabfederungen der nicht oder weniger vom Stab belasteten Führungselemente. Diese Führungselemente liegen nur unter der Kraft der einzelnen Federn am geschälten und krummen Stab an. Diese Lösung verbindet die Vorzüge einer starken Zentrierung mit denen einer Einzelabfederung.
Um eine Einstellung der Führungsvorrichtung auf den einzelnen Bedarfsfall abstimmen zu können, ist die Weiterbildung der Erfindung nach Anspruch 3 vorgesehen.

Die Erfindung stellt in erster Linie auf einen starken Zentriereffekt ab. Hierzu wird die Führungsvorrichtung entsprechend Anspruch 4 eingestellt und betrieben, so daß die Einzelabfederung nur für den selteneren Fall, daß ein sehr steifer und krummer Stab geschält wird, ergänzend und hilfsweise die überwältigte Zentralabfederung unterstützt und im Normalfall durch Anlegen der einzelnen Führungselemente an das starre Widerlager ausgeklammert wird.

Die vorstehend für die hintere Führung beschriebenen Merkmale können gleichermaßen auf eine vordere Führung zwischen dem Einschubapparat und dem Messerkopf Anwendung finden.
Die Erfindung wird im einzelnen anhand der Zeichnung näher erläutert, dabei zeigen :
- Fig. 1 :: Die schematische Dartellung einer Schälmaschine in Seitenansicht, teilweise im Schnitt,
- Fig. 2 :: eine Stirnseitenansicht einer hinteren Führung ohne Werkstück,
- Fig. 3 :: die hintere Führung bei exzentrischem Werkstück,
- Fig. 4 :: einen Ausschnitt IV aus Fig. 2
- Fig. 5 :: einen Ausschnitt aus Fig.2 bei eingeführtem zentrisch angeordnetem Stab,

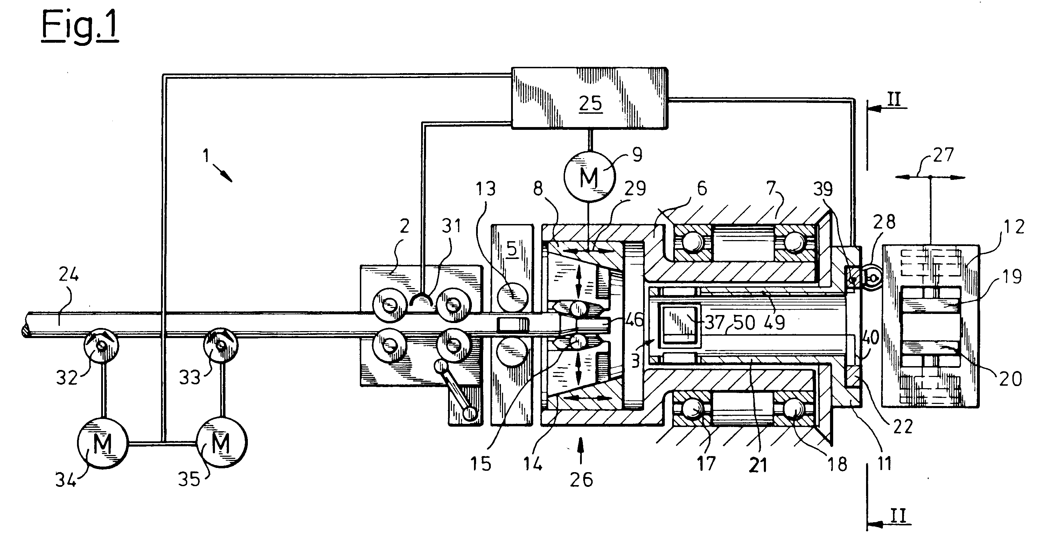

Fig.1 zeigt eine Stange 24, die in einer Schälmaschine 1 geschält wird. Die Schälmaschine besteht aus einem Einschubaggregat 2, einer vorderen Führung 5 einem Messerkopf 26, einer hinteren Führung 3 und einem auslaufseitigen Spannwagen 12, der in Richtung des Pfeiles 27 auf dem Maschinenbett verfahrbar ist. Der Messerkopf ist einlaufseitig an einer Hohlwelle 6 angeordnet, die in Lagern 17, 18 im Maschinengehäuse 7 drehbar gehalten ist. Messerkopf und Hohlwelle laufen beim Betrieb der Hohlwelle um. Der Messerkopf trägt mehrere Schälmesser 15, die auf wendelförmiger Bahn eine Umfangsschicht von der Stange 24 abschälen.

Bei der Schälbearbeitung wird der Stab von der vorderen Führung 5 mit den darin gelagerten, drehantgetriebenen Rollen 13 und der hinteren Führung 3 relativ zur Drehachse von Messerkopf 6 und Hohlwelle 26 zentriert und die vom Schnitt ausgehenden Schwingungen werden gedämpft.

Der Einschubapparat 2 transportiert den Stab durch die Schälmaschine und übernimmt das Schnittmoment. Zwischen den Einschubrollen ist ein Initiator 31 vorgesehen, der die Anwesenheit eines Werkstücks im Einschubapparat feststellt und an die Steuereinheit 25 weiterleitet. Der Stab bewegt sich im wesentlichen ohne Eigendrehung durch die Schälmaschine. Die Stange 24 wird in nicht dargestellter Weise vereinzelt und auf die Zuführrollen 32, 33 gelegt, die von Motoren 34, 35 angetrieben werden und den Stab dem Einschubapparat 2 zuführen. Die Steuerung der gesamten Maschine wird von einer Steuereinrichtung 25 besorgt, die an die Motoren 34, 35 der Zuführrollen, an den Einschubapparat 2, an einen Verstellmotor 9 für die Messerhalter 14, an die hintere Führung 3 und an den Spannwagen 12 angeschlossen ist. Der Einschubapparat 2, die vordere Führung 5, der Messerkopf 26 und die hintere Führung 3, sowie die Spannbacken 19, 20 werden auf den Eingangsdurchmesser bzw. auf den geschälten Durchmesser der Stange 24 eingestellt.

Die Verstellung der Messer 15 in radialer Richtung erfolgt durch den Stellmotor 9, der eine Konushülse 8, an der sich die Messerhalter radial abstützen, in axialer Richtung (Pfeil 29) bewegt und damit den Durchtrittsquerschnitt des Messerkopfes verändert.

Die hintere Führung 3 besteht aus einem in die Hohlwelle hineinkragenden Rohrstutzen 21, der mit seinem Flansch 11 am Maschinengestell 7 befestigt ist. Der Rohrstutzen 21 ragt tief in die Hohlwelle 6 bis in die Nähe des Messerkopfes 26 hinein. An dem einlaufseiten Ende des Rohrstutzens 21 unmittelbar auslaufseitig des Messerkopfes 26 sind drei Führungselemente 36, 37, 38 vorgesehen, die in direktem Kontakt mit der Stange 24 für deren Zentrierung sorgen. Die Führungselemente sind als Klappen ausgebildet, die an Wellen 49, 50, 51 schwenkbar im Rohrstutzen gelagert sind, und die sich durch die Wandung des Rohrstutzens in axialer Richtung bis in den Bereich des Flansches 11 erstrecken, dort mit je einem von ihnen abkragenden Spannarm 39, 40, 41 von einem Steuerring 22 betätigt werden. Der Steuerring 22 ist in dem Flansch 11 drehbar (Pfeil 58) gelagert. An dem Steuerring 22 stützen sich alle gezeigten Spannarme 39, 40, 41 mit ihren freien Enden ab. Die Spannarme mit den Wellen und den Führungselementen sind untereinander gleich ausgebildet. Der Spannarm 40, die Welle 50 das Führungselement 37 sind starr miteinander verbunden. Eine Drehbewegung am Steuerring 22 führt zu einer konzentrischen und synchronen Zustellbewegung der Führungselemente 36, 37, 38. Der Steuerring 22, die Spannarme 39, 40, 41 und die Führungselemente 36-38 an den Wellen 49-51 bilden die Zentralverstellung 48.

Bei einer Drehbewegung des Steuerrings 22 werden sämtliche Spannarme gleichzeitig mit den an den(Spannarmen befestigten Führungselementen 36, 37, 38 geschwenkt. Der Steuering 22 wird gegen einen maschinenseitigen Anschlag 23 von einem Hydraulikzylinder 28 vorgespannt. Wenn ein anderer Durchmesser der Stange 24 geschält werden soll, wird der Anschlag 23 von Hand oder durch die Steuereinrichtung 25 verstellt. Dadurch wird der Steuerring 22 in einer anderen Drehlage positioniert und der Durchtrittsquerschnitt für die Stange 24 zwischen den Führungselementen 36, 37, 38 wird verändert.

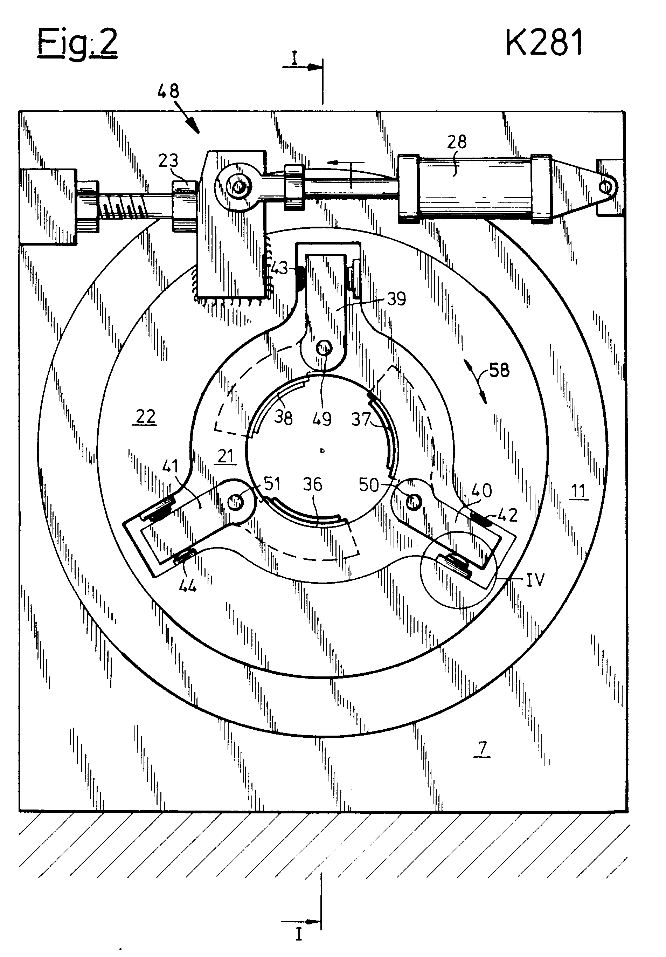

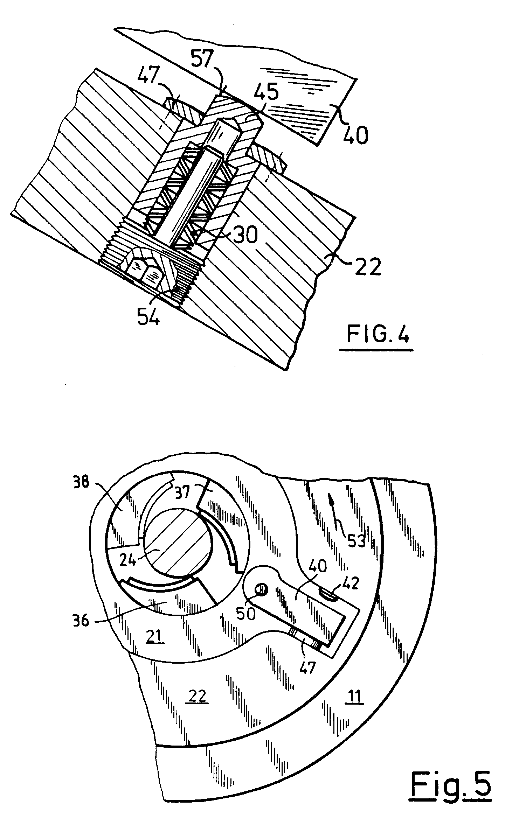

Die freien Enden der Spannarme 39, 40, 41 sind federnd in dem Flansch 11 der hinteren Führung 3 abgestützt. (Fig.4). In der in Fig.2 gezeigten Anordnung der hinteren Führung werden die Spannarme 39, 40, 41 von den Federn 30 gegen Anschläge 42, 43 44 vorgespannt. Die Feder 30 drückt über einen Schieber 45 den Spannarm 40 gegen den Anschlag 42 im Steuerring 22. Die Stirnfläche des Schiebers bildet ein erstes, federndes Widerlager 57 für den Spannarm und das damit verbundene Führungselement. Damit ist das freie Ende des Spannarms 40 zwischen dem federnden Widerlager und dem Anschlag 42 fixiert.
Die Feder 30 wird von einem oder mehreren Tellerfederpaketen gebildet. Durch Änderung der Schichtung und Gruppierung der Tellerfedern kann die Kraft der Einzelabfederung variiert werden. Auch durch Drehen an dem Gewindestopfen 54 kann die Vorspannkraft der Feder 30 verändert Werden.

Die hintere Führung 3 wird für den geschälten Stababschnitt 46 zunächst zu eng voreingestellt, beim Einführen des vorderen Stabendes in die hintere Führung drückt der Stab die Führungselemente 36, 37, 38, die mit einer Einführschräge ausgebildet sind, geringfügig auseinander, bis alle Spannarme an ihrem zweiten Widerlager 47 anliegen. Wie in Fig.5 gezeigt, ist bei eingeführtem zentriertem Stab jeder Spannarm 40 gegen das starre Widerlager 47 zur Anlage gekommen. Die Einzelabfederung der Führungselemente 36, 37, 38 ist unterdrückt. Der Spannarm 40 liegt nicht am Anschlag 42 , sondern am starren Widerlager 47 an.

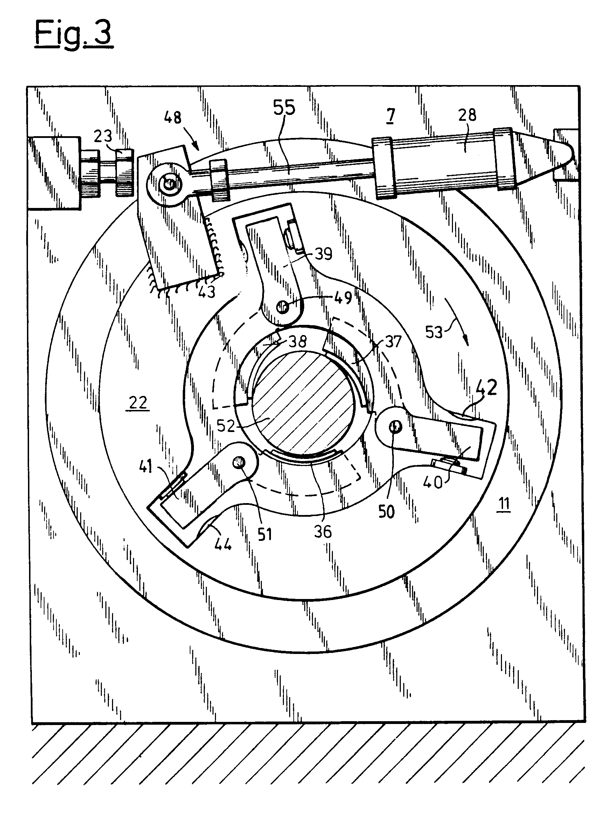

Bei extrem steifen Stäben 52 kann es vorkommen, daß diese nicht ausreichend zentriert werden können, weil sie über ihre Länge gesehen krumm sind. Wenn die Kraft der hinteren Führung nicht ausreicht, den Stab 52 zu zentrieren, öffnet sich zunächts die Zentralverstellung für alle Führungselemente 36, 37, 38. Der Zylinder 28 kann den Steuerring 22 nicht mehr gegen den Anschlag 23 drücken. Unter der Kraft des Stabes 52 dreht sich der Steuerring 22 in Richtung des Pfeiles 53. Die kombinierte gefederte Abstützung des Stabes 52 in der hinteren Führung führt dazu, daß auch im Falle der Außermittigkeit des Stabes in der hinteren Führung, wenn also der Steuerring 22 durch den Stab zurückgedreht wird (Pfeilrichtung 53), trotzdem alle Führungselemente 36, 37, 38 an dem Stab 52 anliegen, weil die einzeln abgefederten Führungselemente durch die Kraft der Federn 30 weiterhin am Stab 52 anliegen. Durch die Verwendung von Tellerfedern für die Einzelabfederung wird zudem eine gewisse Dämpfung bei auftretenden Schwingungen erreicht. Bei der in Fig. 3 gezeigten Situation mit der außermittigen Anordnung des Stabes 52 in der hinteren Führung 3 ergibt sich von Seiten des Führungselementes 36 eine sehr große Kraft auf den Stab, die versucht, den Stab 52 in die Mitte zu drücken, und zwei kleiner Kräfte durch die Führungselemente 37, 38, die ausschließlich die Aufgabe haben, ein Schwingen des Stabes in Querrichtung zu vermeiden.

Zur Auslegung der Federn 30 bzw. des Hydraulikzylinders 28 gilt die Regel, daß die Einzelabfederungen durch die Federn 30 schwächer dimensioniert sein müssen als die zentrale Abfederungen des Steuerrings 22 durch den Hydraulikzylinder 28.

Die Schälmaschine 1 mit der hinteren Führung 3 arbeitet in der Weise, daß der durch den Messerkopf 26 in die hintere Führung eindringende Stabanfang die einzelnen Führungselemente um ein kleines Wegstück aufdrückt, bis die Spannarme 39, 40, 41 gegen die starren Widerlager 47 zur Anlage kommen. Dies ist die Normalposition der Spannarme 39, 40, 41 bei eingeführtem, zentriertem Werkstück. Wenn die Einstellung der hinteren Führung zu klein ausgewählt wurde, wird sie durch Verschwenkung des Steuerrings 22 und durch Zurückdrängen der Kolbenstange 55 des Hydraulikzylinders 28 dem größeren Werkstück geringfügig nachgeben. Wenn ein in seiner Längserstreckung geringfügig gekrümmter Stab durch die Schälmaschine transportiert wird, kann sich die in Fig. 3 dargestellte Situation ergeben, die auch eine außermittige Führung des Stabes zuläßt, wobei jedoch die Zentrierwirkung tendenziell durch die erhöhte Kraft am Führungselement 36 erhalten bleibt. Zusätzlich wird ein Schwingen des Stabes 52 verhindert, weil die nunmehr in Wirkung tretenden Einzelabf ederungen die Führungselemente an den Stab anlegen.

## Patentansprüche

1. Führungsvorrichtung in Schälmaschinen mit einem umlaufenden Messer für in ihrer Längsrichtung zu transportierende, langgestreckte Werkstücke (24), wie Stangen und Rohre, mit mindestens zwei verschwenkbar gelagerten, einzeln abgefederten Führungselementen (36, 37, 38) mit in das Innere eines begrenzt verdrehbaren Spannringes (22) hineinragenden, in radialer Richtung an das Werkstück (24) anlegbaren Führungsflächen, Linien oder Punkten und vorzugsweise etwa radial zum Spannring (22) verlaufenden, fest mit den Führungsflächen, Linien oder Punkten verbundenen Spannarmen (29, 40, 41), die mittels einer abgefederten Zentralverstellung (48) unter Durchführung einer konzentrischen und synchronen Zustellbewegung der Führungsflachen, -linien oder -punkte (36, 37, 38) verschwenkbar sind, solange keine der Führungsflächen, -linien oder -punkte (36, 37, 38) am Werkstück (24) anliegt, **dadurch gekennzeichnet**, daß die freien Enden der Spannarme (39, 40, 41) in je einer Aussparung des Spannringes (6) angeordnet sind, daß die Spannarme (39, 40, 41) gegen seitlich in den Aussparungen angeordnete Widerlager (47, 57) anlegbar sind, daß eines der Widerlager (47) starr und das andere als Einzelabfederung wirkende Widerlager (57) nachgiebig ausgebildet ist und daß das starre Widerlager (47) die Einzelabfederung der Spannarme bzw. das Nachgeben des Widerlagers (57) begrenzt.

2. Führungsvorrichtung nach Anspruch 1, **dadurch gekennzeichnet**, daß die Abfederung (28) der Zentralverstellung (48) härter ist als die Summe der Einzelabfederungen (30).

3. Führungsvorrichtung nach Anspruch 1 oder 2, **dadurch gekennzeichnet**, daß sowohl die Kraft der Einzelabfederung (30) als auch die der Zentralabfederung (28) verstellbar ist.

4. Verfahren zum Betrieb einer Führungsvorrichtung nach einem oder mehreren der vorangegangenen Ansprüche, **dadurch gekennzeichnet**, daß bei Normalbetrieb der Führungsvorrichtung die Einzelabfederung (30) dadurch unterdrückt wird, daß die Führungselemente (36, 37, 38) gegen das feste Widerlager (47) gefahren werden.

## Claims

1. Guide device in peeling machines with a rotating cutter for long workpieces (24), such as bars and tubes, to be transported in their longitudinal direction, with at least two swivelling, individually sprung guide elements (36, 37, 38) having guide surfaces, lines or points, which project into the inside of a clamping ring (22) with limited rotation and can be brought into contact with the workpiece (24) in the radial direction, and having clamping arms (39, 40, 41) which preferably run approximately radially to the clamping ring (22), are firmly connected to the contact surfaces, lines or points and can be swivelled by means of a sprung central adjustment unit (48), performing a concentric and synchronous infeed movement of the guide surfaces, lines or points (36, 37, 38), as long as none of the guide surfaces, lines or points (36, 37, 38) are in contact with the workpiece, **characterised in that** the free ends of the clamping arms (39, 40, 41) are each located in a recess in the clamping ring (6), in that the clamping arms (39, 40, 41) can be brought into contact with abutments (47, 57) located in the recesses, in that one of the abutments (47) is rigid and the other is designed in resilient fashion as an abutment (57) acting as an individual cushioning spring, and in that the rigid abutment (47) limits the individual cushioning of the clamping arms and the giving of the abutment (57).

2. Guide device as per Claim 1, **characterised in that** the springing (28) of the central adjustment unit (48) is harder than the total of the individual cushioning springs (30).

3. Guide device as per Claim 1 or 2, **characterised in that** both the force of the individual cushioning spring (30) and that of the central cushioning spring (28) is adjustable.

4. Process for operating a guide device as per one or more of the above Claims, **characterised in that**, during normal operation of the guide device, the action of the individual cushioning spring (30) is suppressed by the guide elements (36, 37, 38) being driven up against the fixed abutment (47).

## Revendications

1. Dispositif de guidage incorporé dans des machines à écroûter équipées d'une lame tournante destiné à guider des pièces à usiner allongées devant être transportées dans leur sens longitudinal telles que des barres et des tubes, comportant au moins deux éléments de guidage (36, 37, 38) pivotables, montés individuellement sur ressorts et pourvus d'une part de surfaces, lignes ou points de guidage pouvant s'appliquer radialement à la pièce à usiner (24) et saillissant à l'intérieur d'un anneau de serrage (22) pouvant tourner de façon limitée, et d'autre part de bras de serrage (39, 40, 41) orientés de préférence à peu près radialement à l'anneau de serrage (22) et assemblés fixement aux surfaces, lignes ou points de guidage, lesquels bras de serrage peuvent être pivotés au moyen d'un système de réglage centralisé (48) monté sur ressorts tout en faisant effectuer un mouvement d'approche concentrique et synchrone aux surfaces, lignes ou points de guidage (36, 37, 38) tant qu'aucune des surfaces ou lignes ou qu'aucun des points de guidage (36, 37,38) ne soit en contact avec la pièce à usiner (24), dispositif **caractérisé** par ce que les extrémités libres des bras de serrage (39, 40, 41) sont disposées respectivement dans un évidement de l'anneau de serrage (6), que les bras de serrage (39, 40, 41) peuvent s'appliquer sur des butées (47, 57) disposées latéralement dans les évidements, que l'une des butées (47) est conçue inflexible et que l'autre butée (57) est conçue flexible et agissant comme amortisseur individuel et que la butée inflexible (47) limite l'amortissement individuel des bras de serrage respectivement l'élasticité de la butée (57).

2. Dispositif de guidage suivant revendication 1, **caractérisé** par ce que l'amortissement (28) du système de réglage centralisé (48) est plus dur que la somme des amortissements individuels (30).

3. Dispositif de guidage suivant revendication 1 ou 2, **caractérisé** par ce que la force de l'amortissement individuel (30) aussi bien que celle de l'amortissement (28) sont réglables.

4. Procédé pour la marche d'un dispositif de guidage suivant une ou plusieurs des revendications ci-avant, **caractérisé** par ce qu'en service normal du dispositif de guidage. l'amortissement individuel (30) est supprimé par le fait que les éléments de guidage (36, 37, 38) sont déplacés contre la butée fixe (47).
